# EUROPEAN PATENT SPECIFICATION

(11) **EP 2 234 012 B1**
(45) Date of publication and mention of the grant of the patent: **20.07.2016**
(21) Application number: 08870236.0
(22) Date of filing: 16.12.2008
(51) Int. Cl.: G06F 3/14, G06F 3/153, G06F 13/00, G09G 5/14

(54) **INFORMATION-PROCESSING APPARATUS AND PROGRAM**
INFORMATIONSVERARBEITUNGSVORRICHTUNG UND -PROGRAMM
APPAREIL DE TRAITEMENT D'INFORMATIONS ET PROGRAMME

(30) Priority: 08.01.2008 JP 2008001536
(43) Date of publication of application: 29.09.2010
(73) Proprietor: NTT DOCOMO, INC., Chiyoda-ku Tokyo 100-6150 (JP)
(72) Inventor: KANO, Izua, Tokyo 100-6150 (JP); YAMADA, Kazuhiro, Tokyo 100-6150 (JP); KAMIYA, Dai, Tokyo 100-6150 (JP); ONDA, Yasushi, Tokyo 100-6150 (JP); MURAKAMI, Keiichi, Tokyo 100-6150 (JP)
(74) Representative: Hoffmann Eitle
(86) International application number: PCT/JP2008/072852
(87) International publication number: WO 2009/087867

(56) References cited:
- WO-A2-2007/138429
- JP-A- 2002 259 259
- JP-A- 2005 191 949
- JP-A- 2007 233 659
- US-A1- 2006 230 110
- US-B1- 6 449 647
- US-B1- 6 601 101

## Description

### Technical Field

The present invention relates to a graphical user interface (GUI).

### Related Art

There is a type of computer device that, when executing an application program, displays a screen indicating a processing status of the application program in a certain area (which is usually referred to as a "window") in a display device. In particular, there is a type of computer device that executes plural programs in parallel and allows users to change a size of a window.

JP-A-2005-191949, JP-A-6-44029, and JP-A-2001-175239 each disclose techniques for changing display styles of windows, depending on window sizes. JP-A-2005-191949 discloses a technique by which, when a size of a window on a display changes, the size is notified to an image distribution device, which adjusts a bit rate of transmitted data to be in accordance with the window size. JP-A-6-44029 discloses a technique by which a video in a window specified by a user is normally displayed and other videos in other windows are not displayed or are displayed other than normally, for example, with a reduced number of frames per second, in mosaic, in monochrome, or with reduced brightness, when plural video windows are running. JP-A-2001-175239 discloses a technique by which, when plural windows are displayed, windows other than a window of interest are displayed with reduced brightness or with a reduced number of frames per second.

### Disclosure of Invention

### Problems to be Solved by the Invention

A change in a size of a window indicates a change in an amount of information that can be displayed. When an amount of information that can be displayed is changed, it is sometimes desirable to change a data acquisition source. However, in the techniques described in JP-A-2005-191949, JP-A-6-44029, JP-A-2001-175239, the data acquisition source is not changed.

In contrast, the present invention provides a technique for changing a data acquisition source in response to a change in a window size.

WO 2007/138429 relates to providing clients with data streams corresponding only to visible portions of remotely provided applications in order to conserve computing resources

US 6,449,647 discloses a content aware flow switch capable of directing requests to different servers depending on the bandwidth of an application.

### Means of Solving the Problems

To address the above problem, the present invention provides an information-processing device in accordance with that claimed in independent claim 1.

Moreover, the present invention provides a program in accordance with that claimed in independent claim 7.

According to this program, the data acquisition source is changed in response to a change in the window size.

### Brief Description of the Drawings

FIG. 1 is an outside view of mobile phone 1 according to an embodiment of the invention;
FIG. 2 shows a functional structure of mobile phone 1;
FIG. 3 shows a hardware structure of mobile phone 1;
FIG. 4 shows a Java execution environment;
FIG. 5 shows a flowchart showing operations of mobile phone 1; and
FIG. 6 shows an example of correspondence table T1.

### Description of Reference Symbols

1: mobile phone; 3: hinge; 4: key pad; 5: microphone; 6: loudspeaker; 7: antenna; 8: display device; 9A: casing; 9B: casing; 11: execution unit; 12: receiving unit; 13: display control unit; 14: detection unit; 15: determination unit; 16: program storage unit; 17: correspondence storage unit; 18: input unit; 20: display device; 30: network; 40: server; 102: CPU; 103: ROM; 104: RAM; 105: storage unit; 106: operation unit; 107: display unit; 108: communication unit; 109: bus; 111: OS; 112: application; 113: application; 114: Java execution environment; 115: first storage; 116: second storage; 117: class library; 118: JVM; 119: JAM

### Best Mode to Carry out the Invention

### 1. Structure

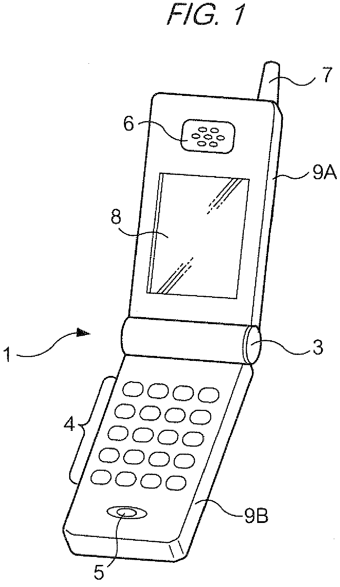

FIG. 1 shows an external view of mobile phone 1 according to one embodiment of the invention. Mobile phone 1 is an example of an information-processing device according to the invention. Mobile phone 1 has casings 9A and 9B. Casings 9A and 9B are connected to each other by hinge 3. Mobile phone 1 is of a foldable type. A user of mobile phone 1 makes voice communications and data communications with the casings 9A and 9B opened relative to each other, as shown in FIG. 1.

Casing 9A includes loudspeaker 6, antenna 7, and display device 8. Loudspeaker 6 outputs audio, sounds indicating operations, and music. Through antenna 7, wireless communications are carried out with wireless base stations. Display device 8 displays text and images. Casing 9B includes keypads 4 and microphone 5. Signals associated with keypads 4 are output in accordance with operations conducted by users. Microphone 5 converts an input sound into an electric signal, and outputs the signal.

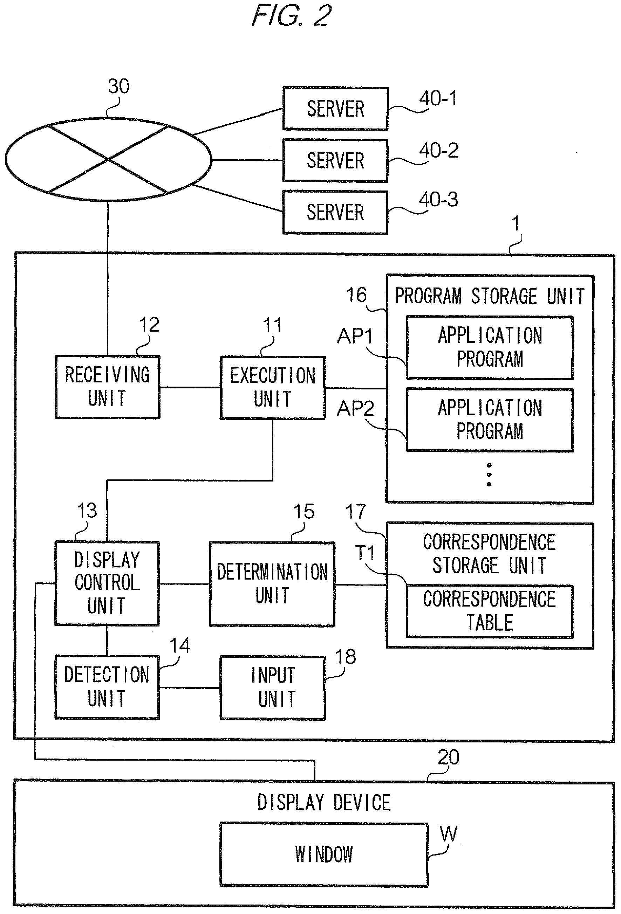

FIG. 2 shows a functional structure of mobile phone 1. Mobile phone 1 is an information-processing device that changes a data acquisition source depending on a window size. Execution unit 11 executes an application program including a process for receiving data from the data acquisition source. In the present embodiment, the data acquisition source is server 40 on network 30. Network 30 includes plural servers (three servers 40-1, 40-2, 40-3, in this example). When it is necessary to distinguish between the plural servers, they are denoted by suffixed reference numerals, such as server 40-1. When it is not necessary to distinguish between the servers, they are simply referred to as server(s) 40.

Receiving unit 12 receives data from the data acquisition source in accordance with a function implemented as a result of execution of an application program executed by execution unit 11. Display control unit 13 controls display device 20 to show window W that displays an image in accordance with the data received by receiving unit 12. Detection unit 14 detects a change in a size of window W. When detection unit 14 detects a change in the window size, determination unit 15 determines a server that serves as a data acquisition source depending on the window size after the change.

Program storage unit 16 stores plural application programs, which, in this example, are programs AP1, AP2, ... and so on. Correspondence storage unit 17 stores information representing a correspondence between window sizes and servers for each application program, which in this embodiment is correspondence table T1. It is to be noted here that execution unit 11 executes at least one of the plural application programs. From the correspondence stored in correspondence storage unit 17, determination unit 15 determines a server corresponding to the changed window size as a data acquisition source. In this example, determination unit 15 performs a process of determining a data acquisition source in an initial state after starting up of an application program and a process of changing the data acquisition source, i.e., a process determining, as a new data acquisition source, a server that is different from the previously determined data acquisition source

Input unit 18 outputs signals in accordance with user instructions. When the signals satisfy a predetermined condition, for example, when a predetermined operation is made in a state where a predetermined image is displayed, detection unit 14 detects that an instruction is input for changing the window size, i.e., there is a change in the window size.

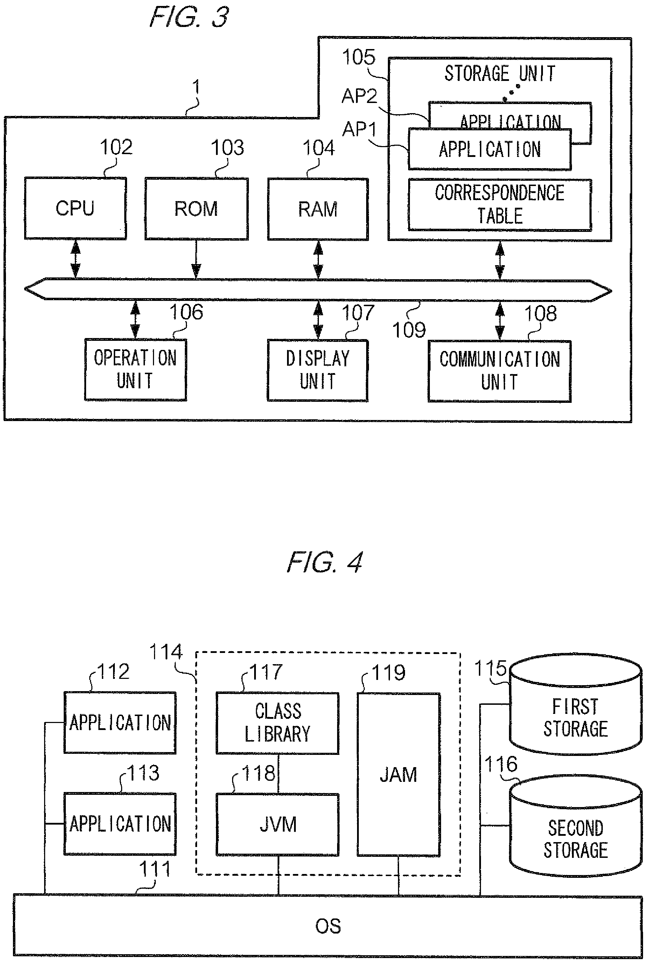

FIG. 3 shows a hardware structure of mobile phone 1. CPU (Central Processing Unit) 102 is a control device that controls respective components of mobile phone 1. ROM (Read Only Memory) 103 is a storage device that stores programs and data that are used for basic operations of mobile phone 1. ROM 103 stores, for example, an IPL (Initial Program Loader), an OS (Operating System) program, and a Java (registered trademark) platform program. The IPL reads a program that is executed first after mobile phone 1 is powered on. In this embodiment, the IPL reads the OS program. The OS program realizes input/output of data, access to a storage device, execution of various programs, voice communications, data communications, and other basic functions of the mobile phone 1. As CPU 102 executes the OS program, mobile phone 1 establishes and attains a functional structure as shown in FIG. 2. The Java platform program establishes a Java execution environment on the OS. The Java platform program will be described in detail later.

RAM (Random Access Memory) 104 functions as a work area when CPU 102 executes a program. Storage unit 105 stores application programs and data. Storage unit 105 has a non-volatile memory. In this embodiment, storage unit 105 has plural application programs AP1, AP2, ... and so on.

Operation unit 106 outputs signals in accordance with a user's operations. Operation unit 106 has key pads (e.g., key pads 4 shown in FIG. 1) including ten-keys, a call key, an end call key, a clear key, a cursor key, a power key, and other keys used for input. A user operates the keypads to input instructions to mobile phone 1. Display unit 107 shows text and images. Display unit 107 has a display device (display device 8 shown in FIG. 1), which may be a liquid crystal display, for example. Display unit 107 shows a window for an application program being executed. Display unit 107 has a display body such as an LCD (liquid crystal display) and a drive circuit for driving the display body. Communication unit 108 performs voice communications or data communications through wireless base stations via an antenna (antenna 7 shown in FIG. 1). Bus 109 is a transmission path through which signals and data are communicated between components. The foregoing components are connected through bus 109.

FIG. 4 shows a Java execution environment. As CPU 102 executes the Java platform program, Java execution environment 114 shown in FIG. 4 is established on OS 111. Java execution environment 114 attains class library 117, JVM (Java Virtual Machine) 118, and JAM (Java Application Manager) 119. Class library 117 compiles a group of program modules (classes) having particular functions. JVM 118 has functions of interpreting and executing bite codes provided as a Java application program. JAM 119 has functions of downloading, installing, starting up, and terminating a Java application program, and of managing other operations of the Java application program.

First storage 115 includes an area that stores Java application programs (Jar files and ADFs (Application Descriptive Files)) that are downloaded under management of JAM 119. Second storage 116 includes an area for storing data, which are generated through execution of Java application programs, after the Java application programs are terminated. In second storage 116, individual storage areas are respectively allocated to Java application programs installed. Data in a storage area allocated to a Java application program is rewritable only while the Java application program is executed, but cannot be rewritten by any other Java application program.

OS 111 has a multitask function of simultaneously performing plural processings in parallel. On OS 111, plural applications such as applications 112 and 113 are executed. Display unit 107 shows windows respectively for the applications.

### 2. Operation

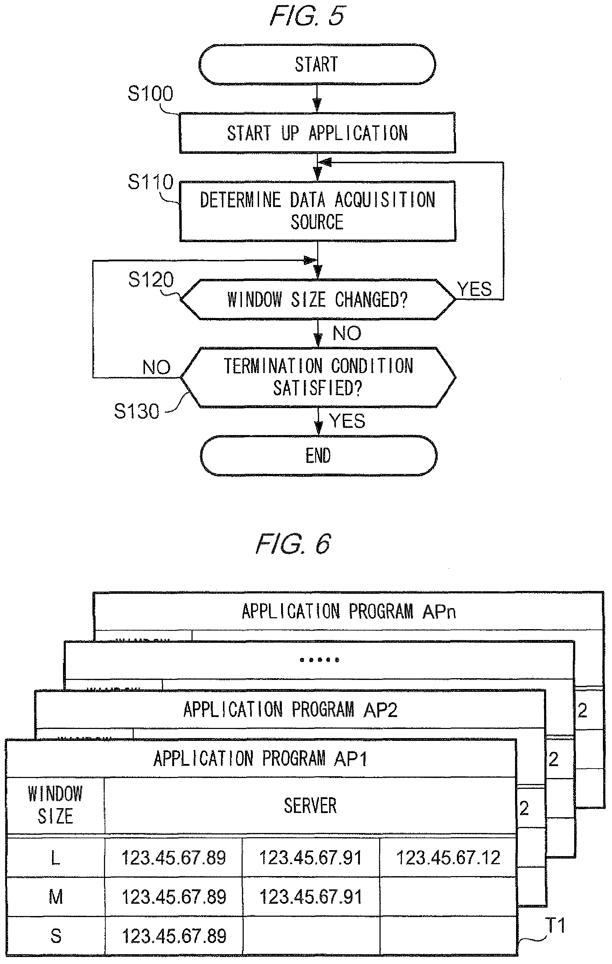

FIG. 5 shows a flowchart showing operations of the mobile phone 1. The flow shown in FIG. 5 is triggered to start, for example, when a user performs a predetermined operation on operation unit 106 (for example, an operation for selecting an application).

In step S100, CPU 102 starts up an application program. Specifically, an application program to be started up is designated by a user operation or by another application that is being executed. The following explanation is made taking a case that application program AP1 is designated as an example. CPU 102 reads out the designated application program from storage unit 105, and executes the program. In this example, the started-up application program includes a process for receiving data from server 40 on the network 30 functioning as a data acquisition source. It is to be noted that when a program "contains a process," the program contains a set of instructions, which, when executed, causes the device to perform the process.

After starting up of an application program, CPU 102 controls display unit 107 to show a window corresponding to the application program. A "window" here represents an area showing information relating to an application program, such as a processing state of the application program, information processed by the application program, and a processing result of the application program. A window is distinguished from other areas by borderlines. Geometrical parameters of a window on a display surface of display unit 107, such as a position, size, and shape, are determined or changed by a user operation, by a function of the OS, or by a function of another application program that is being executed. Initial values of the position, size, etc. of a window, i.e., the position, size, etc. of a window at the time of starting up of an application are stored in storage unit 105. Thus, when an application program is started, CPU 102 reads the geometrical properties of a window from storage unit 105, and displays the window in accordance with the parameters. CPU 102 stores the size of the displayed window in RAM 104.

In step S110, CPU 102 determines a data acquisition source. Specifically, CPU 102 first reads correspondence table T1 from storage unit 105.

FIG. 6 shows an example of correspondence table T1. Correspondence table T1 has sub-tables for respective application programs. Each sub-table includes a window size, and an identifier designating a server(s) corresponding to the window size. In mobile phone 1, a window size can be any one of L size, M size, or S size. Thus, a window size is switched discretely between L size, M size, and S size. In this example, an IP (Internet Protocol) address is used as an identifier of a server. Associated with L size are three IP addresses "123.45.67.89," "123.45.67.91," and "123.45.67.12." Associated with M size are two IP addresses "123.45.67.89" and "123.45.67.91." Associated with S size is one IP address "123.45.67.89."

Referring again to step S110 in FIG. 5, the process of reading out correspondence table T1 from storage unit 105 is carried out as described below. CPU 102 reads an IP address(es) of a server(s) corresponding to a current window size from the sub table corresponding to the application program started up in step S100. Provided that the window size is L size, the three IP addresses "123.45.67.89," "123.45.67.91," and "123.45.67.12" are read out as IP addresses of the servers corresponding to the window size. CPU 102 acquires data from these three servers according to application program AP1.

In this example, the three servers transmit different types of data. The server specified by the IP address "123.45.67.89" transmits text information. The server specified by the IP address "123.45.67.91" transmits image data such as a photograph. The server specified by the IP address "123.45.67.12" transmits music data such as a musical piece. In mobile phone 1, application program AP1 functions to display the text and image in the window and to output music from the loudspeaker 6.

In step S120, CPU 102 determines whether the window size is changed. In this example, CPU 102 determines whether an instruction to change the window size is input. In other words, CPU 102 determines that the window size is changed when an instruction to change the window size is input. The instruction to change the window size is input by a user operating operation unit 106.

If it is determined that the window size is changed (S120:YES), CPU 102 causes the process to go back to step S110. The following explanation is made taking a case that the window size is changed from L size to M size as an example. According to correspondence table T1 shown in FIG. 6, the servers corresponding to M size are two servers specified by IP addresses "123.45.67.89" and "123.45.67.91." CPU 102 acquires data from these two servers according to application program AP1.

If it is determined that the window size is not changed (S120: NO), CPU 102 causes the process to go to step S130.

In step S130, CPU 102 determines whether a termination condition is satisfied. The termination condition is, for example, that a predetermined operation is made on operation unit 106. If it is determined that the termination condition is not satisfied (S130:NO), CPU 102 causes the process to go back to step S120. If it is determined that the termination condition is satisfied (S130: YES), CPU 102 terminates the process shown in FIG. 5.

As described in the foregoing, according to the present embodiment, a data acquisition source during execution of an application is changed depending on a window size.

### 3. Further Embodiments

The invention is not limited only to the embodiment described above but can be variously modified in practice. Some modifications will now be described. In the modifications, components similar to those of the foregoing embodiment will be designated by the same reference signs. Two or more of the modifications below may be used in combination with each other.

### 3-1. Modification 1

An event triggering a change in a window size is not limited to a predetermined operation on operation unit 106 performed by a user. A process according to an application program may trigger a change in a window size. In this case, the executed application program itself contains a process for changing a window size. In step S120 shown in FIG. 5, CPU 102 detects a change in a window size when a process for changing a window size is conducted according to an application program.

### 3-2. Modification 2

Mobile phone 1 does not have to pre-store correspondence table T1, i.e., information representing a correspondence between window sizes and servers for each application program. In this case, an application program contains information representing a correspondence between window sizes and servers as internal data. CPU 102 refers to the internal data contained in the application program to determine a server corresponding to a changed window size as a data acquisition source.

### 3-3. Modification 3

In a case where mobile phone 1 does not pre-store the information representing a correspondence between window sizes and servers, the correspondence may be included in the data acquired from the data acquisition source. In this case, CPU 102 refers to the data acquired from the data acquisition source to determine a server corresponding to a changed window size as a data acquisition source.

### A first comparative example which is not an embodiment of the invention.

In the embodiment, explanation is made of an example where the number of servers functioning as a data acquisition source increases with an increase in the window size, but the number of servers functioning as a data acquisition source does not have to change depending on the window size. In such a case, the correspondence between window sizes and servers may be as described below. Network 30 has plural servers having different processing abilities. CPU 102 determines a server having a lower processing ability as a data acquisition source for a larger window size. A larger window size indicates that a user gives more attention to the associated application program, and thus, a larger part of a processing ability of mobile phone 1 is assigned to the application program.

### A second comparative example

In another example, the correspondence between window sizes and servers may be as described below. Network 30 has plural severs having different data transmission speeds. CPU 102 determines a server having a higher transmission speed as a data acquisition source for a larger window size. A larger window size indicates that a user is more interested in the associated application program, and thus, an amount of data processed by the application program per unit time is increased.

### A third comparative example. The number of sizes that a window can have is not limited to three. Further, a window size may change continuously instead of discretely. Furthermore, a "window" in this example may include an "icon." For example, as a size of a window is reduced, the window may be converted into an icon when the window size crosses a threshold. In this case, the above-described application program may continue to operate after the window becomes an icon.

### A fourth comparative example

In the foregoing embodiment, the process of determining the first (initial) data acquisition source and the process of changing the data acquisition source are performed by the same algorithm, but these processes may be carried out by different algorithms. For example, the initial data acquisition source may be determined irrespective of a window size.

### Other Modifications

Information-processing devices to which the invention is applicable are not limited to mobile phones. Information processing devices may be personal computers, PDAs (Personal Data Assistants), electronic notebooks, wireless communication terminals, wired communication terminals, and many other types of devices. Further, hardware structures of such information processing devices are not limited as shown in FIG. 2. One or more components may be omitted from components shown in FIG. 2. For example, an information-processing device may have no display unit. In this case, the information-processing device is connected to a display device that is separate from the information-processing device. The information-processing device outputs data or a signal for controlling display to the display device. In brief, insofar as an information-processing device has a required functional structure, the information-processing device may be a device of any type and may have any hardware structure. Further, languages in which application programs are written are not limited to Java. Application programs may be written in a language other than Java.

In the above embodiment, the OS has the function of displaying a window depending on an application. A program other than the OS may have this function. In this case, the program having the function may be downloaded through a network. Otherwise, the program may be provided in the form of a storage medium such as a CD-ROM (Compact Disc Read Only Memory) that records the program.

## Claims

1. An information-processing device (1) for a display means (20), the information-processing device comprising:
execution means (11) adapted to execute an application program containing a process of receiving data from a data acquisition source, the data acquisition source including a plurality of servers (40-1, 40-2, 40-3), each server having a unique identifier used in connecting thereto
receiving means (12) adapted to receive data from the data acquisition source in accordance with the execution of the application program;
display control means (13) adapted to control the display means (20) to display a window (20) showing an image in accordance with the execution of the application program;
detection means (14) adapted to detect a size of the window; and changing means (15) adapted to determine, based upon the size of the window detected by the detection means,
a number of unique identifiers being used in connecting to respective servers of the data acquisition source, wherein a larger number of identifiers is determined according to a larger size of the window

2. The information-processing device (1) according to Claim 1, further comprising:
program storage means adapted to store a plurality of application programs; and
correspondence storage means adapted to store a correspondence between window sizes and the unique identifiers for each application program,
wherein
the execution means (11) is adapted to execute at least one of the plurality of application programs; and
the changing means (15) is adapted to determine the number of unique identifiers corresponding to the window size based on the correspondence stored in the correspondence storage means.

3. The information-processing device (1) according to Claim 1, wherein the application program contains a process is adapted to change the size of a window being displayed in accordance with execution of the application program, and the detection means (14) detects the size of the window made by the application program.

4. The information-processing device (1, 10) according to Claim 1, wherein
the application program contains information representing a correspondence between window sizes and identifiers, and
the changing means (15) adapted to determine the number of unique identifiers corresponding to the window size based on the correspondence contained in the information.

5. The information-processing device (1) according to Claim 1, wherein
the data contains information representing a correspondence between window sizes and the unique identifiers, and
the changing means (15) is adapted to determine the number of unique identifiers corresponding to the changed window size as the data acquisition source based on the correspondence contained in the information.

6. The information-processing device (1) according to Claim 1, further comprising input means adapted to output a signal in accordance with a user instruction,
wherein the detection means (14) is adapted to detect the size of the window by detecting that the signal satisfies a predetermined condition.

7. An application program adapted to cause an information-processing device according to claim 1 to perform steps of: executing, by the execution means (11), a process of receiving data from a data acquisition source, the data acquisition source including a plurality of servers (40-1, 40-2, 40-3), each server having a unique identifier for connecting thereto;
receiving data from the data acquisition source in accordance with the execution of the application program; controlling a display means (20) to display a window (W) showing an image in accordance with the execution of the application program;
detecting a size of the window; and determining, based upon a size of the window, the number of unique identifiers to be used in connecting to respective servers of the data acquisition source, wherein a larger number of identifiers is determined according to a larger size of window.

## Patentansprüche

1. Informationsverarbeitungsvorrichtung (1) für ein Anzeigemittel (20), wobei die Informationsverarbeitungsvorrichtung aufweist:
Ausführungsmittel (11), die geeignet sind, ein Anwendungsprogramm auszuführen, das einen Prozess zum Empfangen von Daten aus einer Datenbeschaffungsquelle umfasst, wobei die Datenbeschaffungsquelle mehrere Server (40-1, 40-2, 40-3) aufweist, wobei jeder Server einen eindeutigen Identifikator aufweist, der beim Ankoppeln daran verwendet wird,
Empfangsmittel (12), die geeignet sind, Daten aus der Datenbeschaffungsquelle gemäß der Ausführung des Anwendungsprogramms zu empfangen,
Anzeigesteuermittel (13), die geeignet sind, das Anzeigemittel (20) zu steuern, um ein Fenster (20) anzuzeigen, das ein Bild gemäß der Ausführung des Anwendungsprogramms darstellt,
Erkennungsmittel (14), die geeignet sind, eine Größe des Fensters zu erkennen, und
Veränderungsmittel (15), die geeignet sind, auf Grundlage der Größe des Fensters, die von den Erkennungsmitteln erkannt wurde, eine Anzahl von eindeutigen Identifikatoren zu bestimmen, die beim Ankoppeln an die jeweiligen Server der Datenbeschaffungsquelle verwendet wird, wobei gemäß einer größeren Abmessung des Fensters eine größere Anzahl von Identifikatoren bestimmt wird.

2. Informationsverarbeitungsvorrichtung (1) nach Anspruch 1, ferner mit:
Programmspeichermitteln, die geeignet sind, mehrere Anwendungsprogramme zu speichern, und
Übereinstimmungsspeichermitteln, die geeignet sind, eine Übereinstimmung zwischen Fensterabmessungen und den eindeutigen Identifikatoren für jedes Anwendungsprogramm zu speichern, wobei
die Ausführungsmittel (11) geeignet sind, mindestens eines von den mehreren Anwendungsprogrammen auszuführen, und
die Veränderungsmittel (15) geeignet sind, die Anzahl der eindeutigen Identifikatoren, die der Fensterabmessung entspricht, auf Basis der in den Übereinstimmungsspeichermitteln gespeicherten Übereinstimmung zu bestimmen.

3. Informationsverarbeitungsvorrichtung (1) nach Anspruch 1, wobei
das Anwendungsprogramm einen Prozess aufweist, der geeignet ist, die Abmessung eines Fensters, das angezeigt wird, gemäß der Ausführung des Anwendungsprogramms zu verändern, und
die Erkennungsmittel (14) die Abmessung des Fensters, das vom Anwendungsprogramm erzeugt wurde, erkennen.

4. Informationsverarbeitungsvorrichtung (1, 10) nach Anspruch 1, wobei
das Anwendungsprogramm Informationen aufweist, die eine Übereinstimmung zwischen Fensterabmessungen und Identifikatoren darstellen, und
die Veränderungsmittel (15) geeignet sind, die Anzahl der eindeutigen Identifikatoren, die der Fensterabmessung entspricht, auf Basis der in den Informationen enthaltenen Übereinstimmung zu bestimmen.

5. Informationsverarbeitungsvorrichtung (1) nach Anspruch 1, wobei
die Daten Informationen aufweisen, die eine Übereinstimmung zwischen Fenstergrößen und den eindeutigen Identifikatoren darstellen, und
die Veränderungsmittel (15) geeignet sind, die Anzahl der eindeutigen Identifikatoren entsprechend der veränderten Fensterabmessung auf Basis der in den Informationen enthaltenen Übereinstimmung als die Datenbeschaffungsquelle zu bestimmen.

6. Informationsverarbeitungsvorrichtung (1) nach Anspruch 1, ferner mit Eingabemitteln, die geeignet sind, gemäß einer Nutzeranweisung ein Signal auszugeben,
wobei die Erkennungsmittel (14) geeignet sind, die Abmessung des Fensters zu erkennen, indem sie erkennen, dass das Signal eine vorgegebene Bedingung erfüllt.

7. Anwendungsprogramm, das geeignet ist, eine Informationsverarbeitungsvorrichtung nach Anspruch 1 zu veranlassen, die Schritte auszuführen zum:
Ausführen eines Prozesses zum Empfangen von Daten aus einer Datenbeschaffungsquelle durch die Ausführungsmittel (11), wobei die Datenbeschaffungsquelle mehrere Server (40-1, 40-2, 40-3) aufweist, wobei jeder Server einen eindeutigen Identifikator aufweist, um daran anzukoppeln,
Empfangen von Daten aus der Datenbeschaffungsquelle gemäß der Ausführung des Anwendungsprogramms,
Steuern eines Anzeigemittels (20), um ein Fenster W anzuzeigen, das ein Bild gemäß der Ausführung des Anwendungsprogramms darstellt,
Erkennen einer Größe des Fensters und
Bestimmen der Anzahl von eindeutigen Identifikatoren auf Grundlage einer Größe des Fensters, die beim Ankoppeln an die jeweiligen Servern der Datenbeschaffungsquelle zu verwenden ist, wobei gemäß einer größeren Abmessung des Fensters eine größere Anzahl von Identifikatoren bestimmt wird.

## Revendications

1. Dispositif de traitement d'informations (1) pour un dispositif d'affichage (20), le dispositif de traitement d'informations comprenant :
un moyen d'exécution (11) adapté pour exécuter un programme d'application contenant un procédé de réception de données d'une source d'acquisition de données, la source d'acquisition de données comprenant une pluralité de serveurs (40-1, 40-2, 40-3), chaque serveur ayant un identifiant unique utilisé en connexion avec celui-ci ;
un moyen de réception (12) adapté pour recevoir des données de la source d'acquisition de données conformément à l'exécution du programme d'application ;
un moyen de commande d'affichage (13) adapté pour commander le moyen d'affichage (20) pour afficher une fenêtre (20) montrant une image conformément à l'exécution du programme d'application ;
un moyen de détection (14) adapté pour détecter une taille de la fenêtre ; et
un moyen de changement (15) adapté pour déterminer, sur la base de la taille de la fenêtre détectée par le moyen de détection, un certain nombre d'identifiants uniques utilisés en connexion avec des serveurs respectifs de la source d'acquisition de données, dans lequel un plus grand nombre d'identifiants sont déterminés en fonction d'une taille plus grande de la fenêtre.

2. Dispositif de traitement d'informations (1) selon la revendication 1, comprenant en outre :
un moyen de stockage de programmes adapté pour stocker une pluralité de programmes d'application ; et
un moyen de stockage de correspondance adapté pour stocker une correspondance entre des tailles de la fenêtre et les identifiants uniques pour chaque programme d'application, dans lequel
le moyen d'exécution (11) est adapté pour exécuter au moins l'un de la pluralité de programmes d'application ; et
le moyen de changement (15) est adapté pour déterminer le nombre d'identifiants uniques correspondant à la taille de la fenêtre sur la base de la correspondance stockée dans le moyen de stockage de correspondance.

3. Dispositif de traitement d'informations (1) selon la revendication 1, dans lequel
le programme d'application contient un procédé qui est adapté pour changer la taille d'une fenêtre affichée conformément à l'exécution du programme d'application, et
le moyen de détection (14) détecte la taille de la fenêtre établie par le programme d'application.

4. Dispositif de traitement d'informations (1, 10) selon la revendication 1, dans lequel
le programme d'application contient des informations représentant une correspondance entre les tailles de la fenêtre et les identifiants, et
le moyen de changement (15) est adapté pour déterminer le nombre d'identifiants uniques correspondant à la taille de la fenêtre sur la base de la correspondance contenue dans les informations.

5. Dispositif de traitement d'informations (1) selon la revendication 1, dans lequel
les données contiennent des informations représentant une correspondance entre les tailles de la fenêtre et les identifiants uniques, et
le moyen de changement (15) est adapté pour déterminer le nombre d'identifiants uniques correspondant à la taille modifiée de la fenêtre comme source d'acquisition de données basée sur la correspondance contenue dans les informations.

6. Dispositif de traitement d'informations (1) selon la revendication 1, comprenant en outre un moyen d'entrée adapté pour délivrer un signal conformément à une instruction utilisateur,
dans lequel le moyen de détection (14) est adapté pour détecter la taille de la fenêtre en détectant que le signal satisfait à une condition prédéterminée.

7. Programme d'application adapté pour amener un dispositif de traitement d'informations selon la revendication 1 à effectuer les étapes consistant à :
exécuter par le moyen d'exécution (11) un procédé de réception de données d'une source d'acquisition de données, la source d'acquisition de données comprenant une pluralité de serveurs (40-1, 40-2, 40-3), chaque serveur ayant un identifiant unique pour s'y connecter ;
recevoir des données de la source d'acquisition de données conformément à l'exécution du programme d'application ;
commander un moyen d'affichage (20) pour afficher une fenêtre (W) montrant une image conformément à l'exécution du programme d'application ;
détecter une taille de la fenêtre ; et
déterminer, sur la base de la taille de la fenêtre, le nombre d'identifiants uniques à utiliser pour se connecter aux serveurs respectifs de la source d'acquisition de données, dans lequel un plus grand nombre d'identifiants est déterminé en fonction d'une taille plus grande de la fenêtre.
